# EUROPEAN PATENT SPECIFICATION

(11) **EP 1 304 814 B1**
(45) Date of publication and mention of the grant of the patent: **02.11.2006**
(21) Application number: 02020406.1
(22) Date of filing: 10.09.2002
(51) Int. Cl.: H04B 1/707

(54) **CDMA receiver, and path selection method**
CDMA-Empfänger und Verfahren zur Wegeauswahl
Récepteur AMRC et procédé pour la sélection de voies

(30) Priority: 19.10.2001 JP 2001321568
(43) Date of publication of application: 23.04.2003
(73) Proprietor: NEC CORPORATION, Tokyo (JP)
(72) Inventor: Otani, Takuya, c/o NEC Corporation, Tokyo (JP)
(74) Representative: Glawe, Delfs, Moll

(56) References cited:
- EP-A- 0 756 391
- EP-A- 0 989 685
- PATENT ABSTRACTS OF JAPAN vol. 2000, no. 24, 11 May 2001 (2001-05-11) & JP 2001 186056 A (TOSHIBA CORP), 6 July 2001 (2001-07-06)

## Description

### BACKGROUND OF THE INVENTION

### Field of the Invention:

The present invention relates to a CDMA (Code Division Multiple Access) receiver, and more particularly, to a CDMA receiver which restricts the delay time difference between paths which are subjected to a rake synthesis to fall within a predetermined range which is narrower than a path measurement range of a searcher circuit.

### Description of the Related Art:

In the CDMA system, in order to realize an efficient communication even in a multi-path environment (or frequency selective fading environment) as shown in FIG. 9, a base station (or a mobile terminal) performs a rake synthesis reception in which signals (or paths) of different delay times as shown in FIG. 10 are shifted in time and synthesized together as shown in FIG. 11.

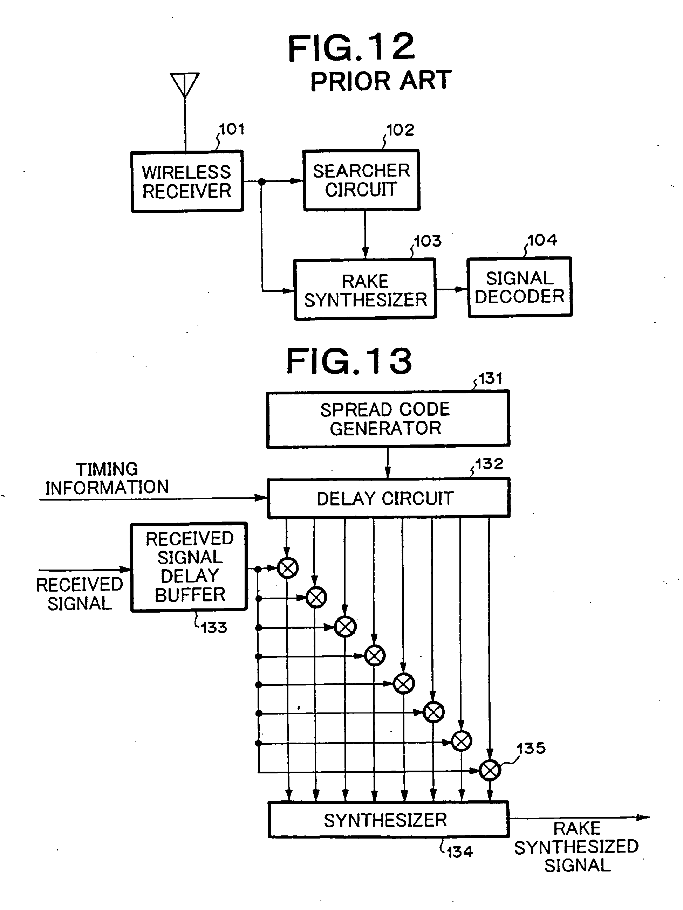

FIG. 12 shows a structure of a conventional CDMA receiver which is used in a base station and a mobile terminal. As shown in FIG. 12, the conventional CDMA receiver comprises a wireless receiver 101, a searcher circuit 102, a rake synthesizer 103 and a signal decoder 104.

The wireless receiver 101 performs frequency conversion and analog-to-digital conversion on a received signal. The searcher circuit 102 measures a delay profile (or a distribution of signal power along a delay time) and selects some of paths which exist within a path measurement range on the basis of the delay profile. The searcher circuit 102 also notifies the rake synthesizer 103 of timing information indicating the timings (or the delay times) of the selected paths. The rake synthesizer 103 performs despreading on each path in accordance with the informed timing information and performs rake synthesis. Data stream which is derived from the rake synthesizer 103 is subjected to error correction in the signal decoder 104.

It is desirable that the rake synthesizer 103 which performs the rake synthesis synthesizes as many paths as possible in order to increase the reception power and improve the communication quality. As a matter of fact, however, the number of paths which are synthesized is limited due to the restriction of the scale of the circuit. Therefore, conventionally, paths which will be subjected to the synthesis in the rake synthesizer 103 are selected from the paths which exist within the range of path measurement range using any of the methods as follows:
A. Selecting a predetermined number of paths of which levels are ranked higher (for example, as disclosed in the column of "the related art" of JP 2000-101549A),
B. Determining a threshold on the basis of the average power of the delay profile and so forth, and selecting paths of which levels are higher than the threshold (for example, as disclosed in JP 2000-101549A),
C. Selecting paths which exist around the main wave (for example, the path which arrived at the receiver for the first time) and of which the levels are higher than a threshold in the order of time difference from the main wave until the number of the selected paths reaches a predetermined value (for example, as disclosed in JP 2001-186056A).

According to the methods A-C, the paths having higher levels are selected so that the reception power becomes high, and the communication quality becomes high. However, the method A and B among the methods A-C select the paths which will be subjected to the synthesis, only from a view point of the levels of paths. Therefore, the selected paths may include a combination of paths having large delay time difference therebetween. The maximum delay time difference corresponds to the path measurement range of the searcher circuit 102. Though the method C selects a predetermined number of paths having levels higher than a threshold in the order of distance from the main wave, the method C may select paths including a combination of paths having delay time difference therebetween which is the same as the path measurement range of the searcher circuit 102.

As mentioned above, if the paths to be synthesized are selected using the conventional methods A-C, then there is possibility that the selected paths include a combination of paths having delay time difference therebetween which is the same as the path measurement range of the searcher circuit 102. Therefore, the rake synthesizer 103 which performs rake synthesis on the paths selected by the conventional methods A-C, must be capable of performing rake synthesis on the paths having as large the delay time difference therebetween as the path measurement range of the searcher circuit 102. If the paths to be synthesized are selected by the conventional methods A-C, then there is caused a disadvantage that the circuit scale of the rake synthesizer 103 becomes large, because the circuit scale of the rake synthesizer 103 becomes large as the delay time difference between paths which may be rake synthesized becomes large. For example, if a rake synthesizer comprises a spread code generator 131, a delay circuit 132, a received signal delay buffer 133, a synthesizer 134 and a correlator 135 as shown in FIG. 13, then the circuit scale of the reception signal delay circuit 133 becomes large as the delay time difference between paths which may be rake synthesized becomes large.

### SUMMARY OF THE INVENTION

It is an object of the present invention to provide a CDMA receiver which reduces the circuit scale of the rake synthesizer while keeping the communication quality.

In order to attain the above object, a CDMA receiver according to the present invention repeats a process of deleting the path having lower level among both end paths (or paths between which the delay time difference is the maximum) existing in a path measurement range of a searcher circuit from selection targets until a range covering remaining paths which were not deleted becomes narrower than a synthesis range (which is narrower than the path measurement range) of the rake synthesizer. Thereafter, it makes the paths existing in the synthesis range synthesis target paths. According to this structure, because continuous paths among paths which exist in the path measurement range of the searcher circuit are selected as synthesis target paths of the rake synthesizer, the delay time difference of the synthesis target paths is shortened as compared with the conventional technology. As a result, the circuit scale of the rake synthesizer may be reduced. In addition, because the paths which have higher level are left behind, the reception power is kept high and the communication quality is kept high.

More specifically, the CDMA receiver according to the present invention comprises a searcher circuit which comprises:
measuring means which measures the delay profile on the wave transmission; and
a path selector which repeats a process of deleting a path which has lower level among the both end paths of the path measurement range from the selection targets until a range covering paths which exist as the selection targets becomes narrower than the synthesis range.

In addition, in order to reduce the influence of the noise, the path selector calculates a delay time difference between each of the both end paths and an inside path which adjoins each of the both end paths, and deletes a path which relates to a longer delay time difference among both end paths from the selection targets.

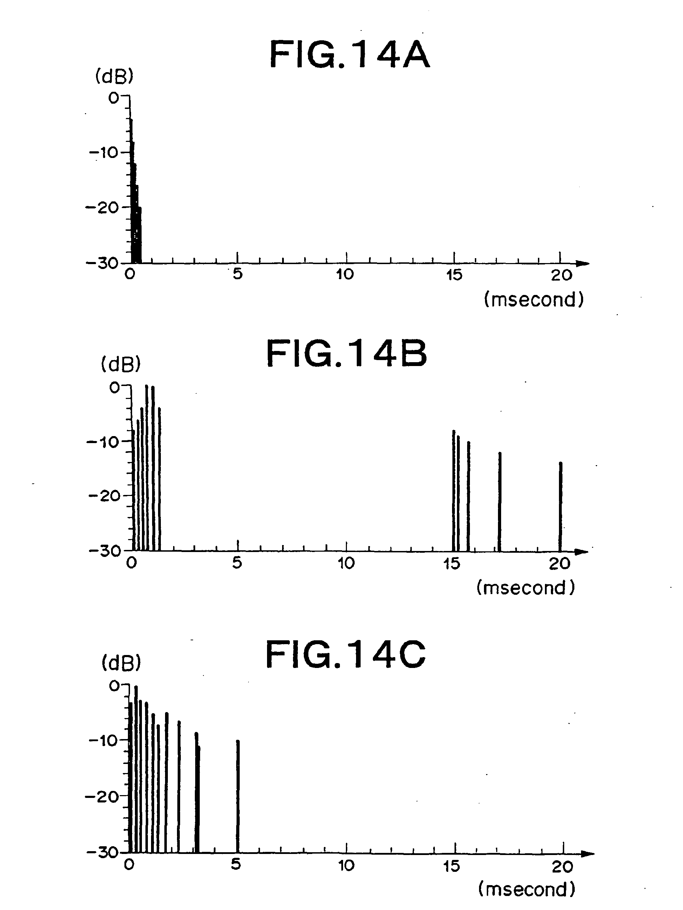

FIGS. 14A, 14B and 14C show propagation models of a rural district, a hill and a city, respectively. As shown in FIGS. 14A, 14B and 14C, the paths concentrate. If there is a path which has a long delay time difference from the adjoining path, the possibility that the path is a noise is high. Therefore, the deletion of the paths which have long delay time differences from the selection targets reduces the influence of the noise.

In addition, according to the present invention, in order to shorten the processing time of the searcher circuit, a process of deleting a path which has lower level among both end paths of a path measurement range while limiting the selection targets to those of which levels are greater than a threshold is repeated until a range covering paths which exist as the selection targets becomes narrower than a synthesis range of the rake synthesizer which is narrower than the path measurement path.

According to this construction, only the paths which have levels higher than a threshold become process targets, whereby the process time of the searcher circuit may be shortened.

These and other objects, features and advantages of the present invention will become more apparent in the light of the following detailed description of the best mode embodiments thereof, as illustrated in the accompanying drawings.

### BRIEF DESCRIPTION OF THE DRAWINGS

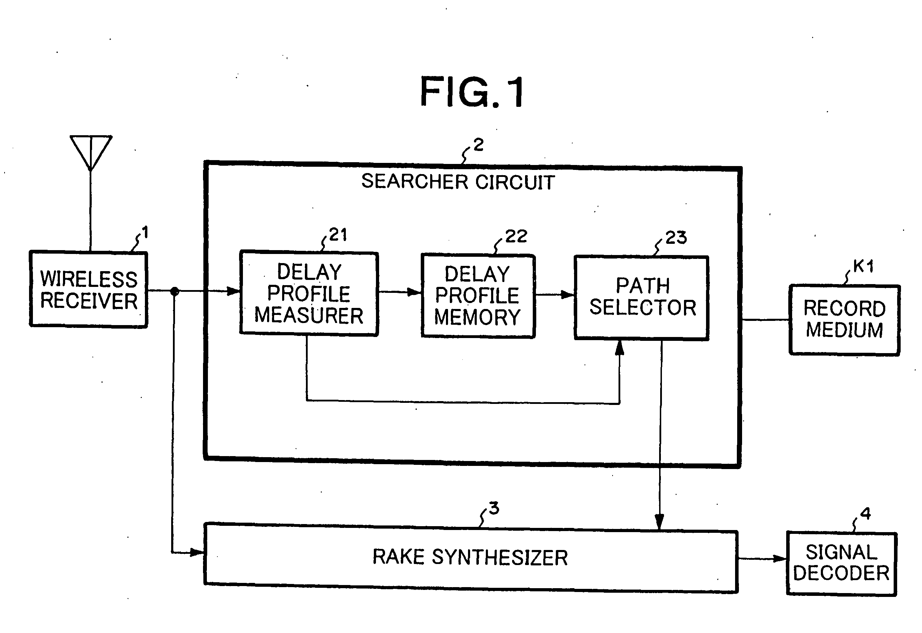

FIG. 1 is a block diagram of a CDMA receiver according to an embodiment of the present invention;

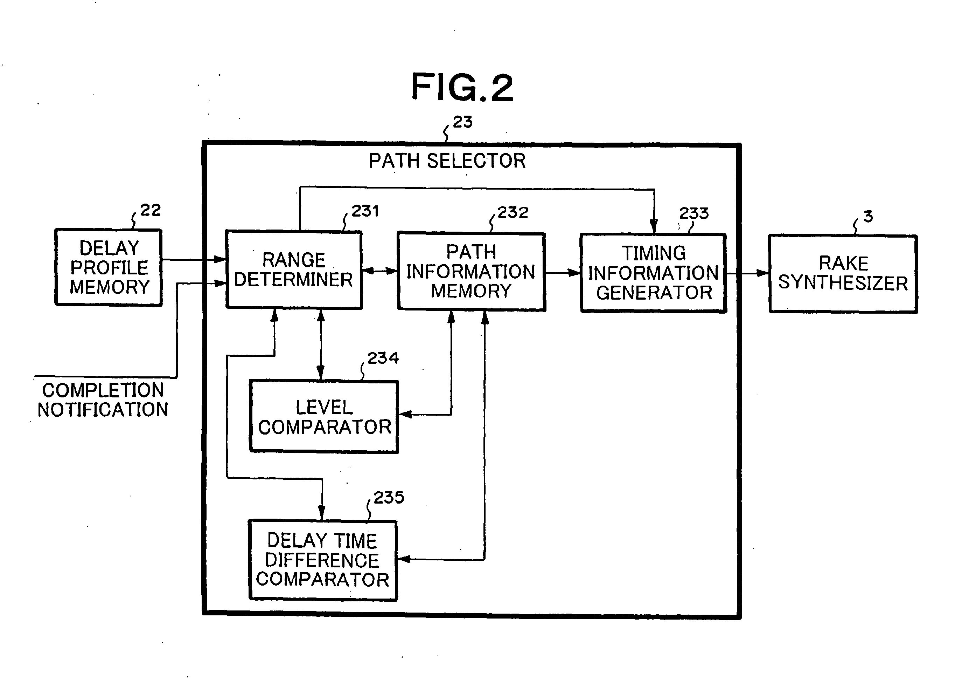

FIG. 2 is a block diagram of a path selector as shown in FIG. 1;

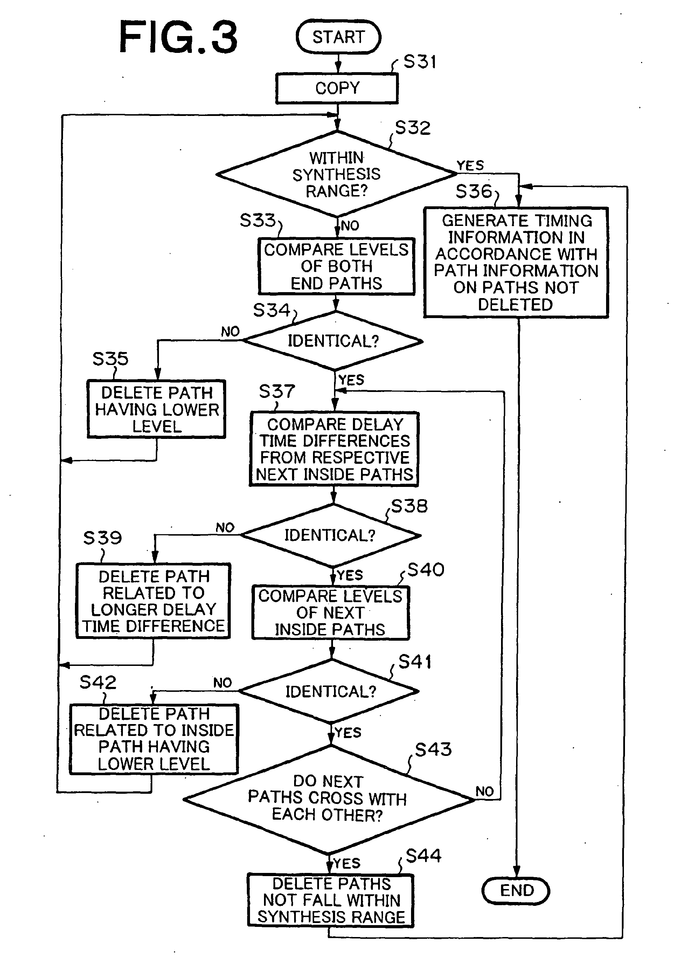

FIG. 3 is a flow chart showing an operation of the path selector as shown in FIG. 1

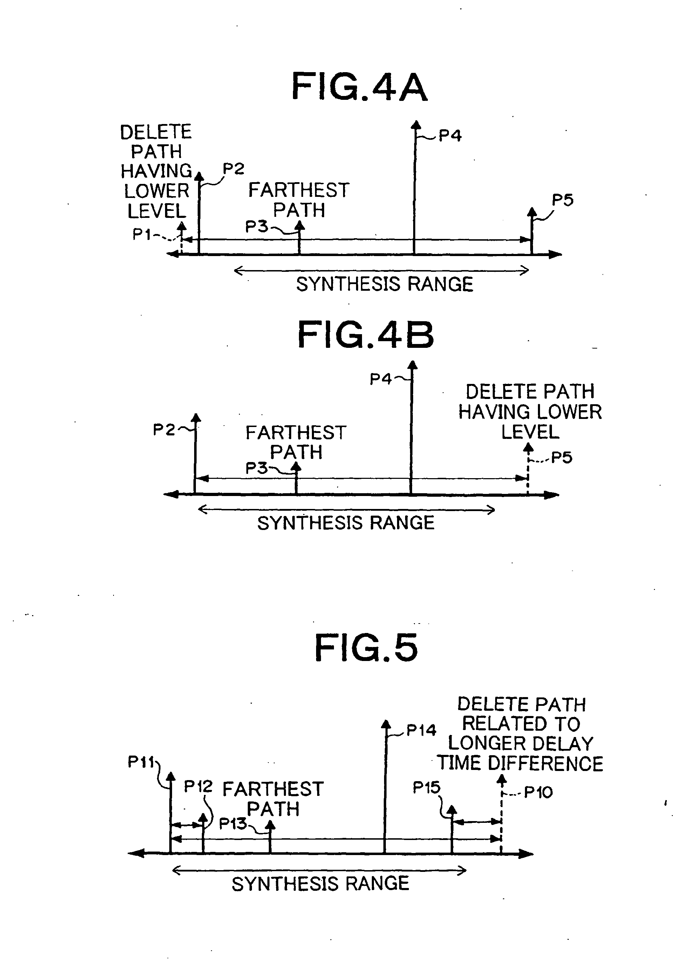

FIGS. 4A and 4B are a diagram showing a first example of paths to be processed by the path selector as shown in FIG. 1;
FIG. 5 is a diagram showing a second example of paths to be processed by the path selector as shown in FIG. 1;

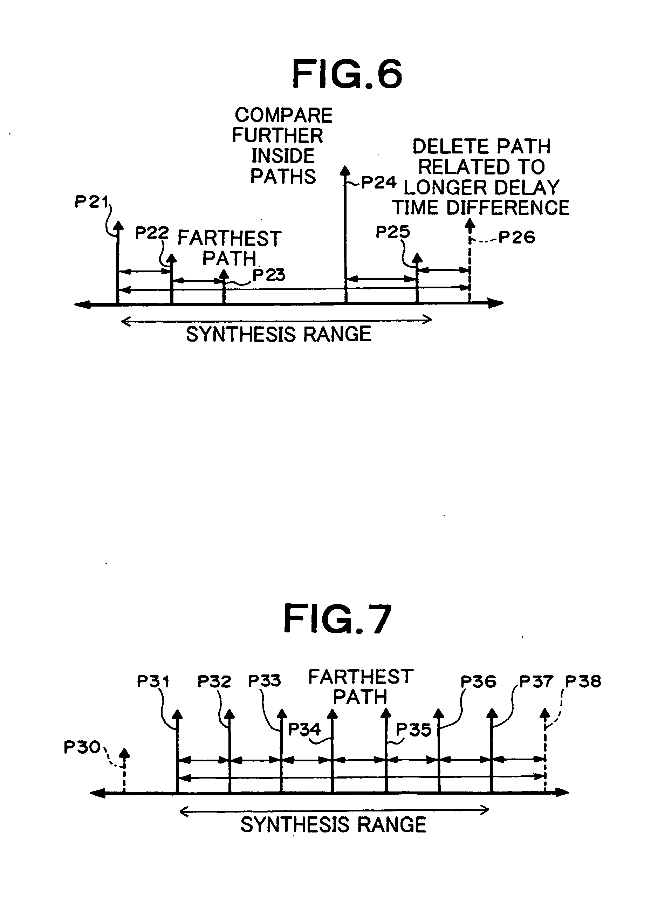

FIG. 6 is a diagram showing a third example of paths to be processed by the path selector as shown in FIG. 1;
FIG. 7 is a diagram showing a fourth example of paths to be processed by the path selector as shown in FIG. 1;

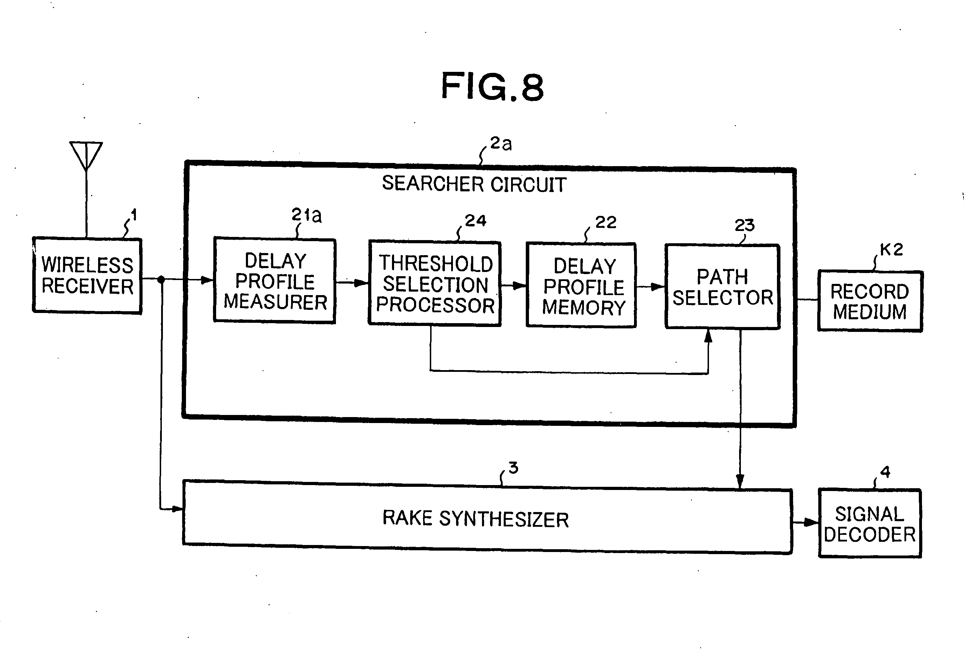

FIG. 8 is a block diagram of a CDMA receiver according to another embodiment of the present invention;

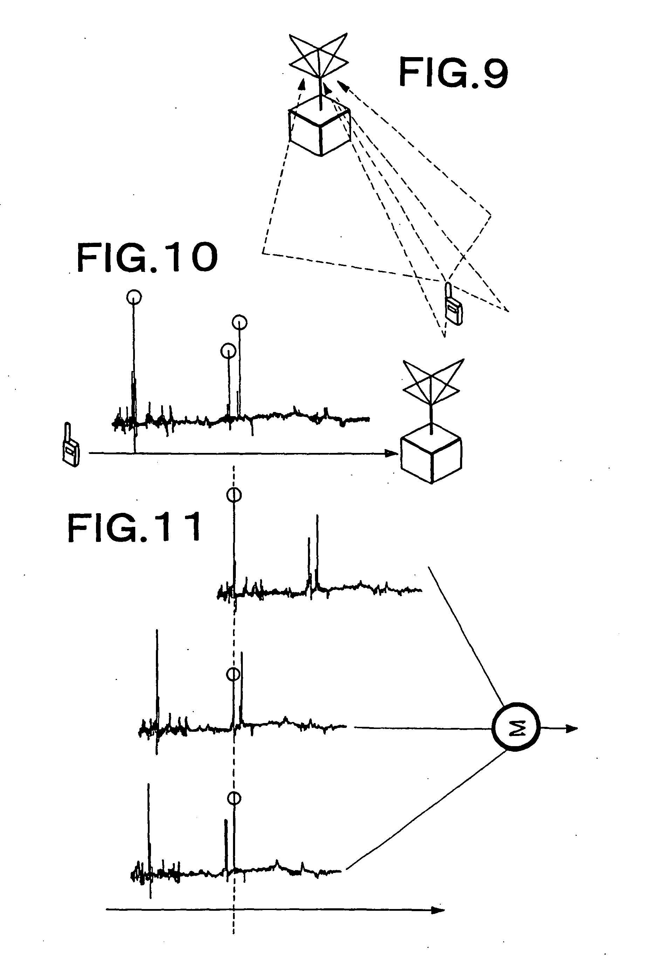

FIG. 9 is a diagram for explanation of multi-path environment;
FIG. 10 is a diagram showing an example of a received signal;
FIG. 11 is a diagram for explanation of rake synthesis;
FIG. 12 is a block diagram of a conventional CDMA receiver;
FIG. 13 is a block diagram of an example of a rake synthesizer; and
FIGS. 14A-14C are graphs showing propagation models.

### DETAILED DESCRIPTION OF THE PREFERRED EMBODIMENT

Preferred embodiment according to the present invention will be described with reference to the accompanying drawings.

FIG. 1 shows a block diagram of an embodiment of a CDMA receiver according to the present invention. As shown in this figure, the CDMA receiver of this embodiment comprises a wireless receiver 1, a searcher circuit 2, a rake synthesizer 3 and a signal decoder 4.

The wireless receiver 1 has a function of performing frequency conversion of a received signal to IF frequency and a function of performing analog-to digital conversion.

The searcher circuit 2 has a function of selecting paths to be synthesized (or demodulated) in the rake synthesizer 3 and comprises, for example, a DSP (Digital Signal Processor). The searcher circuit 2 of this embodiment comprises a delay profile measurer 21, a delay profile memory 22, a path selector 23 and a record medium K1.

The delay profile measurer 21 has a function of measuring a delay profile which represents a delay time and level of each path existing within the path measurement range, a function of storing the measured result to the delay profile memory 22, and a function of sending a completion notification to the path selector 23 when the delay profile measurement has been completed.

The path selector 23 has a function of repeating a process in which, on the basis of the contents of the delay profile memory 22, it compares the levels of two paths (both end paths) which are not yet deleted and have the longest delay time difference therebetween among such delay time differences, the two paths being selected from the paths existing within the path measurement path, and it deletes the path having lower level, until the range covering the paths not deleted becomes narrower than the synthesis range of the rake synthesizer (which is narrower than the path measurement path), a function of supplying to the rake synthesizer 3 timing information (or delay time) representing each of remaining paths which should be target paths of rake synthesis. In addition, the path selector 23 has a function in which, if the levels of both end paths are identical, then the path selector 23 calculates a delay time difference between each end path and the adjoining inside path and deletes the path which has a longer delay time difference from the adjoining inside path among the both end paths . Further, the path selector 23 has a function in which, if the levels of both end paths are identical and the delay time differences from respective adjoining inside paths are identical, then the path selector deletes the path which corresponds to one of the adjoining inside paths which has lower level among the both end paths.

The path selector 23 which has the above functions has a structure, for example, as shown in a block diagram of FIG. 2. As shown in FIG. 2, the path selector 23 comprises a range determiner 231, a path information memory 232, a timing information generator 233, a level comparator 234 and a delay time difference comparator 235.

The range determiner 231 has functions as follow:
· A function of copying the contents of the delay profile memory 22 to the path information memory 232 when the completion notification is sent from the delay profile measurer 21.
· A function of outputting to the level comparator 234 a comparison instruction which includes information representing the two paths of which the levels should be compared (for example, both end paths and an n-th inside path for each of both end paths and the like) when the copy of the contents of the delay profile memory 23 has been completed and when it receives notification that the delay time differences are identical from the delay time difference comparator 235.
· A function of outputting to the delay time difference comparator 234 a comparison instruction which includes information representing the inside path which will be a partner of each of the both end paths when calculating a delay time difference (for example, an m-th inside path for each of both end paths and the like) when it receives notification that the levels are identical from the level comparator 234.
· A function of determining whether or not the range covering the remaining paths which were not deleted is narrower than the synthesis range on the basis of the contents of the path information memory 232 when it receives, from the level comparator 234 or the delay time difference comparator 235, a notification that path information has been deleted.
· A function of outputting a generation instruction for generating timing information to the timing information generator 233 when it is determined that the range covering the remaining paths which were not deleted is narrower than the synthesis range.

The level comparator 234 has functions as follow:
· A function of comparing the levels of the two paths which are indicated by the comparison instruction on the basis of the contents of the path information memory 232 when the level comparator 234 receives the comparison instruction from the range determiner 231.
· A function of notifying the range determiner 231 of an event that the levels of the two paths are identical when such an event occurs.
· A function of deleting the path information on the path of which the level is lower from the path information memory 232 and a function of notifying the range determiner 231 of the deletion when an event that the levels of the two paths are not identical occurs.

The delay time difference comparator 235 has functions as follows:
· A function of calculating a delay time difference between each of both end paths and the inside path indicated by the information contained in the comparison instruction and comparing the two delay time differences when the delay time difference comparator 235 receives the comparison instruction from the range determiner 231.
· A function of notifying the range determiner 231 of an event that the two delay time differences, each of which is delay time difference between one of both end paths and the corresponding inside path, are identical when such an event occurs.
· A function of deleting the path information on the path relating to the longer delay time difference among the both end paths from the path information memory 232 and a function of notifying the range determiner 231 of the deletion when an event that the two delay time differences, each of which is delay time difference between one of both end paths and the corresponding inside path, are not identical occurs.

The timing information generator 233 has a function of generating timing information (or delay times) which is used to have each path of which path information is stored in the path information memory 232 be subjected to the path synthesis in the rake synthesizer 3, and a function of outputting the timing information to the rake synthesizer 3. If the number of fingers (not shown) existing in the rake synthesizer 3 is less than the number of paths of which the path information is stored in the path information memory 232, as many paths which has higher levels as the number of the fingers are selected from the paths of which the path information is stored, and the selected paths are subjected to the rake synthesis.

Returning to FIG. 1, the rake synthesizer 3 has a function of performing despreading for each path which is indicated by the timing information which is notified from the path selector 23 and a function of performing rake synthesis.

The signal decoder 4 has a function of performing an error correction and the like on the data stream outputted from the rake synthesizer 3.

The record medium K1 is a record medium such as a semiconductor memory, and a disc. A program for having a DSP function as the searcher circuit 2 is recorded therein. The program is read by the DSP and controls the operation of the DSP, whereby the delay profile measurer 21 and the path selector 23 are embodied on the DSP.

Next, the operation of this embodiment will be described.

The delay profile measurer 21 in the searcher circuit 2 measures the delay profile representing the delay time and level of each path existing in the path measurement range, and stores the measurement result to the delay profile memory 22. Thereafter, the delay profile measurer 21 notifies the path selector 23 of the completion of the measurement of the delay profile.

Responding to this, the range determiner 231 in the path selector 23 copies the contents of the delay profile memory 22 to the path information memory 232 (S31 in FIG. 3). As a result, the path information (level and delay time) of each path which exists in the path measurement range of the searcher circuit 2 is stored in the path information memory 232. Thereafter, the range determiner 231 determines whether or not the range covering the remaining paths which were not deleted is narrower than the synthesis range on the basis of the contents of the path information memory 232 (S32). The synthesis range has a given value which is narrower than the measurement range of the searcher circuit 2

Now, suppose that paths P1-P5 as shown in FIG. 4A are stored in the path information memory 232. In this case, the range covering paths P1-P5 is not narrower than the synthesis range. Therefore, the determination result at step S32 becomes NO. If the determination result of the step S32 becomes NO, then the range determiner 231 instructs the level comparator 234 to compare the levels of both end paths P1 and P5.

Responding to this, the level comparator 234 refers to the path information memory to compare the levels of paths P1 and P5 (S33). In the case of FIG. 4A, P1 < P5. Therefore, the level comparator 234 deletes the path information on path P1 from the path information memory 232 to exclude the path P1 from the selection targets and notifies the range determiner 231 of the deletion (NO at step S34, then S35).

Responding to this, the range determiner 231 refers to the contents of the path information memory 232 to determine whether or not the range covering remaining paths P2-P5 which were not deleted is narrower than the synthesis range (S32). In this case, the range covering paths P2-P5 is not narrower than the synthesis range as shown in FIG. 4B. Therefore, the determination result at step S32 becomes NO. As a result, the level comparator 234 compares the levels of both end paths P2 and P5, and the path information on path P5 having lower level is deleted from the path information memory 232 (S33, NO at step S34, then S35). After path P5 has been deleted, the range covering remaining paths P2-P4 which were not deleted becomes narrower than the synthesis range as shown in FIG. 4B (YES at S32). Therefore, the range determiner 231 outputs a generation instruction for generating timing information to the timing information generator 233.

Responding to this, the timing information generator 233 generates, on the basis of the path information on paths P2-P4 stored in the path information memory 232, the timing information for having the rake synthesizer 3 synthesize paths P2-P4, and output the timing information to the rake synthesizer 3 (S36). Rake synthesizer 3 synthesizes path P2-P4 in accordance with the timing information.

In the example as shown in FIGS. 4A and 4B, there is no case that the determination result at step S34 becomes YES. However, for example, if path information on paths P11-P16 (the levels of both end paths P11 and P16 are identical) as shown in FIG. 5 is stored in the path information memory 232, then the determination result at step S34 becomes YES.

In the case of the example as shown in FIG. 5, because the range covering paths P11-P16 is not narrower than the synthesis range, and the levels of paths P11 and P16 are identical, the determination results at steps S32 and S34 become NO and YES, respectively. If the determination result at step S34 becomes YES, then the level comparator 234 notifies the range determiner 231 that the levels of the both end paths P11 and P16 are identical.

Responding to this, the range determiner 231 outputs a comparison instruction to the delay time difference comparator 235. The comparison instruction includes information that what are measured are a delay time difference between end path P11 and path P12 which is the first inside path (or adjoining path) when a viewpoint is set at end path P11 toward inside and a delay time difference between end path P16 and path P15 which is the first inside path (or adjoining path) when a viewpoint is set at end path P16 toward inside.

Upon receiving the comparison instruction, the delay time difference comparator 235 calculates the delay time difference between paths P11 and P12 and the delay time difference between path P15 and P16, and compares the delay time differences. In this example, the delay time difference between paths P15 and P16 is longer. Therefore, the delay time difference comparator 235 deletes the path information on path P16 which is stored in the path information memory 232, and notifies the range determiner 231 of the deletion (NO at S38, then S39).

Upon receiving the above notification, the range determiner 231 refers to the path information memory 232, and determines whether or not the range covering the remaining paths P11-P15 is narrower than the synthesis range (S32). In the example as shown in FIG. 5, the range covering path P11-P15 is narrower than the synthesis range (YES at S32). Therefore, the range determiner 231 outputs the generation instruction for generating the timing information to the timing information generator 233. Responding to this, the timing information generator 233 generates the timing information indicating paths P11-P15, and outputs the timing information to the rake synthesizer 3 (S36).

In the examples as shown in FIGS. 4A, 4B and 5, there is no case that the determination result at step S38 becomes YES. However, for example, if path information on path P21-P26 (the levels of both end paths P21 and P26 are identical and paths P22 and P25 are in identical conditions) as shown in FIG. 6 is stored in the path information memory 232, then the determination result at step S38 becomes YES.

In the example as shown in FIG. 6, because the range covering paths P21-P26 is not narrower than the synthesis range, and the levels of paths P21 and P26 are identical, the determination results at steps S32 and S34 become No and YES, respectively. If the determination result at step S34 becomes YES, then the level comparator 234 notifies the range determiner 231 that the levels of the both end paths P21 and P26 are identical.

Responding to this, the range determiner 231 instructs the delay time difference comparator 235 to compare a delay time difference between end path P21 and a first inside path P22 and a delay time difference between end path P26 and another first inside path P25. Responding to this, the delay time difference comparator 236 calculates the delay time difference between paths P21 and P22 and the delay time difference between paths P25 and P26, and compares the delay time differences (S37). In this example, the delay time differences are identical. Therefore, the determination result at step S38 becomes YES, and the delay time difference comparator 235 notifies the range determiner 236 that the delay time differences are identical.

Upon receiving the above notification, the range determiner 231 instructs the level comparator 234 to compare the levels of the first inside paths P22 and P25. Responding to this, the level comparator 234 compares the levels of the first inside paths P22 and P25 (S40). In this example, the levels of paths P22 and P25 are identical (YES at S41). Therefore, the level comparator 234 notifies the range determiner 231 that the levels of the first inside paths P22 and P25 are identical.

Upon receiving the above notification, the range determiner 231 determines whether or not the next inside paths (or the second inside paths) cross with each other. "Crossing" means that an n-th inside path counting from the left end path locates closer to the rightmost path than another n-th inside path counting from the right end path. In this example, the second paths P23 and P24 do not cross with each other. Therefore, the determination result at step S43 becomes NO. If the determination result at step S43 becomes NO, then the range determiner 231 instructs the delay time difference comparator 235 to compare a delay time difference between end path P21 and a second inside path P23 and a delay time difference between end path P26 and another second inside path P24.

Responding to this, the delay time difference comparator 235 calculates the delay time difference between paths P21 and P23 and the delay time difference between paths P24 and P26, and compares the delay time differences (S37). In the example as shown in FIG. 6, the delay time difference between paths P24 and P26 is longer. Therefore, the delay time difference comparator 235 deletes the path information on the rightmost path P26 which is stored in the path information memory 232 (S39), and notifies the range determiner 231 of the deletion.

Upon receiving the above notification, the range determiner 231 refers to the path information memory 232, and determines whether or not the range covering path P21-P25 is narrower than the synthesis range (S32). In this example, the range covering paths P21-P25 is narrower than the synthesis range (YES at S32). Therefore, the range determiner 231 outputs a generation instruction for generating timing information to the timing information generator 233.

Upon receiving the generation instruction, the timing information generator 233 refers to the path information memory 232 to generate timing information on the remaining path P21-P25 which were not deleted, and outputs the timing information to the rake synthesizer (S36).

In the examples as shown in FIGS. 4A, 4B, 5 and 6, there is no case that the determination result at step S43 becomes YES. However, if path information on paths P30, P31-P38 as shown in FIG. 7 is stored in the path information memory 232, the determination result at step S43 becomes YES. Paths P31-P38 have the same levels and are located at the same intervals. The level of path P30 is lower than the levels of paths P31-P38.

In the example as shown in FIG. 7, because the range covering paths P30-P38 is not narrower than the synthesis range, the levels of both end paths P30 and P38 are compared (NO at S32, then S33). Because the level of path P30 is lower, path P30 is deleted as a non-selection target (NO at S34, then S35).

Even though path P30 is deleted from the selection targets, the range covering paths P31-P38 which are still the selection targets is not narrower than the synthesis range. Therefore, the levels of both end paths P31 and P38 are compared (NO at S32, then S33). Because the levels of paths P31 and P38 are identical (YES at S34), a delay time difference between end path P31 and a first inside path P32 and a delay time difference between end path P38 and another first inside path P37 are compared (S37). Because the delay time differences are identical (YES at S38), the levels of the first inside paths P32 and P37 are compared (S40). Because the levels of the first inside paths P32 and P37 are identical (YES at S41), it is determined whether or not the next inside paths (or the second inside paths) P33 and P36 cross with each other (S43).

Because the second inside path P33 and P36 do not cross with each other (NO at S43), the comparison of delay time differences (S37) and the comparison of the levels (S40) are executed for the second inside paths P33 and P36.

Thereafter, the comparison of delay time differences (S37) and the comparison of the levels (S40) are executed for the third inside paths P34 and P35.

Thereafter, it is determined that the fourth inside paths P35 and P34 do cross with each other at step S43. If the determination result at step S43 becomes YES, then the range determiner 231 refers to the path information memory 232, and deletes the path information on the paths which do not fall within the synthesis range (S44). A method for deleting the path information on the path (path P38 in the example as shown in FIG. 7) which does not fall within the synthesis range starting from the leftmost path P31 or a method for deleting the path information on the path which does not fall within the synthesis range starting from the rightmost path P38, for example, may be adopted as a method for deleting the path information at step S44. Adoption of such methods yields the maximum number of paths which fall within the synthesis range, and the increase of the reception power. Thereafter, the range determiner 231 outputs a generation instruction for generating timing information to the timing information generator 233.

In response to this, the timing information generator 233 generates, on the basis of the path information stored in the path information memory 232, the timing information indicating the paths which will be synthesized in the rake synthesizer 3, and outputs the timing information to the rake synthesizer 3 (S36).

In the above example, if the levels of the both end paths are identical, then the path to be deleted is determined on the basis of the delay time differences between the both end paths and the inside paths and the levels of the inside paths. However, if the levels of the levels of the both end paths are identical, the path at the predetermined end may be deleted. In addition, in the above example, if the delay time differences between the both end paths and the inside paths are identical, then the path to be deleted is determined on the basis of the levels of the inside paths. However, if the delay time differences between the both end paths and the inside paths are identical, the path at the predetermined end may be deleted. Further, the above example was described for a case where the present invention is applied to a CDMA receiver. However, the present invention may be applied to a base station and a mobile terminal.

Next, another embodiment of the present invention will be described.

FIG. 8 shows a block diagram of another embodiment of the present invention. The difference from the above embodiment as shown in FIG. 1 is that this embodiment comprises a searcher circuit 2a in the place of the searcher circuit 2. The searcher circuit 2a is different from the searcher circuit 2 as shown in FIG. 1 in that a threshold selection processor 24 is added, the delay profile measurer 21 is replaced with a delay profile measurer 21a and the record medium K1 is replace with a record medium K2. In FIG. 8, the same members as those as shown in the FIG. 1 are represented by the same references.

The delay profile measurer 21a has a function of measuring a delay profile representing the delay time and level of each path existing within the path measurement range, and a function of outputting the measurement result to the threshold selection processor 24.

The threshold selection processor 24 has a function of selecting, on the basis of the measurement result of the delay profile measurer 21a, the paths having levels greater than a threshold, a function of storing the delay times and levels of the selected paths to the delay profile memory 22, a function of outputting a completion notification to the path selector 23 when the storing process of the selected paths to the delay profile memory 22 has been completed. The above threshold has a value which is obtained by adding a predetermined value to a noise level.

The record medium K2 is a record medium such as a semiconductor memory, and a disc. A program for having a DSP function as the searcher circuit 2a is recorded therein. The program is read by the DSP and controls the operation of the DSP, whereby the delay profile measurer 21a, the threshold selection processor 24 and the path selector 23 are embodied on the DSP.

Next, the operation of this embodiment will be described.

The delay profile measurer 21a measures the delay profile representing the delay time and level of each path existing in the path measurement range, and outputs the measurement result to the threshold selection processor 24.

The threshold selection processor 24 selects, on the basis of the measurement result of the delay profile measurer 21a, the paths having levels greater than the threshold, and stores the delay times and levels of the selected paths to the delay profile memory 22. Thereafter, the threshold selection processor 24 sends a completion notification to the threshold selection processor 24.

Responding to this, the path selector 23 performs the process as shown in FIG. 3 which was described to select the paths to be synthesized in the rake synthesizer 3, and outputs the timing information indicating the selected paths to the rake synthesizer 3.

According to this embodiment, because the paths to be processed in the path selector 23 are narrowed down to the paths having levels greater than the threshold, the processing time of the path selector 23 is shortened. In addition, because the information stored in the delay profile memory 22 is limited to the information on the paths having levels greater than the threshold, the capacity of the delay profile memory 22 is reduced. Further, the above embodiment was described for a case where the present invention is applied to a CDMA receiver. However, the present invention may be applied to a base station and a mobile terminal.

## Claims

1. A CDMA receiver comprising
a delay profile measurer (21) adapted to measure a delay profile of a received signal;
a path selector (23) adapted to select paths from paths represented by said delay profile; and
a rake synthesizer (3) adapted to synthesize the paths selected by said path selector (23),
**characterized by that**
said path selector (23) is adapted to repeat a process of deleting one of both end paths existing in a path measurement range until the path measurement range covering remaining paths which has been reduced by deletion becomes narrower than a synthesis range of said rake synthesizer (3).

2. The CDMA receiver as set forth in claim 1, wherein the deleted one of the both end paths is a path which has a lower level than the other one of both end paths.

3. The CDMA receiver as set forth in claim 2, wherein if the both end paths have identical levels, then the deleted one of the both end paths is a path which corresponds to a delay time difference longer than the other delay time difference, each of the delay time differences being measured between each of the both end paths and an adjoining inside path.

4. The CDMA receiver as set forth in claim 3, wherein if the both end paths have identical levels and the delay time difference between one of the both end paths and an adjoining inside path and the delay time difference between the other of the both end paths and an adjoining inside path are identical, then the deleted one of the both end paths is a path which corresponds to the adjoining inside path which has a lower level than the other adjoining inside path.

5. The CDMA receiver as set forth in claim 4, wherein if the both end paths have identical levels, the delay time difference between one of the both end paths and an adjoining inside path and the delay time difference between the other one of the both end paths and an adjoining inside path are identical, the level of the adjoining inside path of one of the both end paths and the level of the adjoining inside path of the other one of the both end paths are identical, and further inside paths do not cross with each other, then the deleted one of the both end paths is a path which corresponds to a delay time difference longer than the other delay time difference, each of the delay time differences being measured between each of the both end paths and the further adjoining inside path.

6. The CDMA receiver as set forth in claim 5, wherein if the both end paths have identical levels, the delay time difference between one of the both end paths and an adjoining inside path and the delay time difference between the other one of the both end paths and an adjoining inside path are identical, the level of the adjoining inside path corresponding to one of the both end paths and the level of the adjoining inside path of the other one of the both end paths are identical, the further inside paths do not cross with each other and the delay time difference between one of the both end paths and the further adjoining inside path and the delay time difference between the other one of the both end paths and the further adjoining inside path are identical, then the deleted one of the both end paths is a path which corresponds to the further adjoining inside path which has lower level than the other one of the further adjoining inside paths.

7. The CDMA receiver as set forth in claim 4, wherein if the both end paths have identical levels, the delay time difference between one of the both end paths and an adjoining inside path and the delay time difference between the other one of the both end paths and an adjoining inside path are identical, the level of the adjoining inside path of one of the both end paths and the level of the adjoining inside path of the other one of the both end paths are identical, and further inside paths cross with each other, then said path selector (23) is adapted to delete paths which do not fall within the synthesis range.

8. The CDMA receiver as set forth in claim 1, further comprising:
a threshold selection processor (24) inserted between said delay profile measurer (2) and said path selector (23) wherein said threshold selection processor (24) is adapted to delete paths having a lower level than a threshold.

9. The CDMA receiver as set forth in claim 1, wherein the CDMA receiver is included in a base station.

10. The CDMA receiver as set forth in claim 1, wherein the CDMA receiver is included in a mobile terminal.

11. A path selection method comprising:
a delay profile measuring step which measures a delay profile of a received signal;
a path selecting step which selects paths from paths represented by said delay profile; and
a rake synthesizing step which synthesizes the paths selected by said path selector (23),
**characterized by that**
said path selecting step repeats a process of deleting one of both end paths existing in a path measurement range until the path measurement range covering remaining paths which has been reduced by the deletion becomes narrower than a synthesis range of said rake synthesizer (3).

12. The path selection method as set forth in claim 11, wherein the deleted one of the both end paths is a path which has a lower level than the other one of both end paths.

13. The path selection method as set forth in claim 12, wherein if the both end paths have identical levels, then the deleted one of the both end paths is a path which corresponds to a delay time difference longer than the other delay time difference, each of the delay time differences being measured between each of the both end paths and an adjoining inside path.

14. The path selection method as set forth in claim 13, wherein if the both end paths have identical levels and the delay time difference between one of the both end paths and an adjoining inside path and the delay time difference between the other one of the both end paths and an adjoining inside path are identical, then the deleted one of the both end paths is a path which corresponds to the adjoining inside path which has a lower level than the other adjoining inside path.

15. The path selection method as set forth in claim 14, wherein if the both end paths have identical levels, the delay time difference between one of the both end paths and an adjoining inside path and the delay time difference between the other one of the both end paths and an adjoining inside path are identical, the level of the adjoining inside path of one of the both end paths and the level of the adjoining inside path of the other one of the both end paths are identical, and further inside paths do not cross with each other, then the deleted one of the both end paths is a path which corresponds to a delay time difference longer than the other delay time difference, each of the delay time differences being measured between each of the both end paths and the further adjoining inside path.

16. The path selection method as set forth in claim 15, wherein if the both end paths have identical levels, the delay time difference between one of the both end paths and an adjoining inside path and the delay time difference between the other one of the both end paths and an adjoining inside path are identical, the level of the adjoining inside path of one of the both end paths and the level of the adjoining inside path of the other one of the both end paths are identical, the further inside paths do not cross with each other and the delay time difference between one of the both end paths and the further adjoining inside path and the delay time difference between the other one of the both end paths and the further adjoining inside path are identical, then the deleted one of the both end paths is a path which corresponds to the further adjoining inside path which has a lower level than the other one of the further adjoining inside paths.

17. The path selection method as set forth in claim 14, wherein if the both end paths have identical levels, the delay time difference between one of the both end paths and an adjoining inside path and the delay time difference between the other one of the both end paths and an adjoining inside path are identical, the level of the adjoining inside path of one of the both end paths and the level of the adjoining inside path of the other of the both end paths are identical, and further inside paths cross with each other, then said path selector (23) deletes paths which do not fall within the synthesis range.

18. The path selection method as set forth in claim 11, further comprising
a threshold selection processing step inserted between said delay profile measuring step and said path selection step, wherein said threshold selection processing step deletes paths having a lower level than a threshold.

## Patentansprüche

1. CDMA-Empfänger mit
einer Verzögerungsprofilmessvorrichtung (21), die angepasst ist, ein Verzögerungsprofil eines empfangenen Signals zu messen,
einem Pfadselektor (23), der angepasst ist, die Pfade aus den Pfaden auszuwählen, die durch das Verzögerungsprofil dargestellt werden, und
einem Rake-Synthetisierer (3), der angepasst ist, die Pfade zu synthetisieren, die von dem Pfadselektor (23) ausgewählt wurden,
**dadurch gekennzeichnet, dass** der Pfadselektor (23) angepasst ist, einen Schritt des Löschens von einem der beiden Endpfade zu wiederholen, die in einem Pfadmessungsbereich vorliegen, bis der Pfadmessungsbereich, der die übrig gebliebenen Pfade abdeckt, die durch das Löschen verringert wurden, enger als ein Synthesebereich des Rake-Synthetisierers (3) wird.

2. CDMA-Empfänger nach Anspruch 1, wobei der Gelöschte der beiden Endpfade ein Pfad ist, der einen niedrigeren Pegel als der andere der beiden Endpfade aufweist.

3. CDMA-Empfänger nach Anspruch 2, wobei, wenn die beiden Endpfade identische Pegel aufweisen, dann der Gelöschte der beiden Endpfade ein Pfad ist, der einer Verzögerungszeitdifferenz entspricht, die länger als die andere Verzögerungszeitdifferenz ist, wobei die Verzögerungszeitdifferenz zwischen jedem der beiden Endpfade und einem angrenzendem Pfad gemessen wird.

4. CDMA-Empfänger nach Anspruch 3, wobei, wenn die beiden Endpfade identische Pegel aufweisen und wenn die Verzögerungszeitdifferenz zwischen dem einem der beiden Endpfade und einem angrenzendem Pfad und die Verzögerungszeitdifferenz zwischen dem anderen der beiden Endpfade und einem angrenzenden Pfad identisch sind, dann der Gelöschte der beiden Endpfade ein Pfad ist, der dem angrenzenden inneren Pfad entspricht, der einen geringeren Pegel als der andere angrenzende innere Pfad aufweist.

5. CDMA-Empfänger nach Anspruch 4, wobei, wenn die beiden Endpfade identische Pegel aufweisen und wenn die Verzögerungszeitdifferenz zwischen dem einem der beiden Endpfade und einem angrenzendem Pfad und die Verzögerungszeitdifferenz zwischen dem anderen der beiden Endpfade und einem angrenzenden Pfad identisch sind und wenn der Pegel des angrenzenden inneren Pfades des einen der beiden Endpfade und der Pegel des angrenzenden inneren Pfades des anderen der beiden Endpfade identisch sind und wenn die weiteren inneren Pfade sich nicht miteinander kreuzen, dann der Gelöschte der beiden Endpfade ein Pfad ist, der einer Verzögerungszeitdifferenz entspricht, die länger als die andere Verzögerungszeitdifferenz ist, wobei jede der Verzögerungszeitdifferenzen zwischen jedem der beiden Endpfade und dem weiteren angrenzenden inneren Pfad gemessen wird.

6. CDMA-Empfänger nach Anspruch 5, wobei, wenn die beiden Endpfade identische Pegel aufweisen und wenn die Verzögerungszeitdifferenz zwischen dem einem der beiden Endpfade und einem angrenzendem Pfad und die Verzögerungszeitdifferenz zwischen dem anderen der beiden Endpfade und einem angrenzenden Pfad identisch sind und wenn der Pegel des angrenzenden inneren Pfades des einen der beiden Endpfade und der Pegel des angrenzenden inneren Pfades des anderen der beiden Endpfade identisch sind und wenn die weiteren inneren Pfade sich nicht miteinander kreuzen und wenn die Verzögerungszeitdifferenz zwischen dem einem der beiden Endpfade und dem weiteren angrenzenden inneren Pfad und die Verzögerungszeitdifferenz zwischen dem anderen der beiden Endpfade und dem weiteren angrenzenden inneren Pfad identisch sind, dann der Gelöschte der beiden Endpfade ein Pfad ist, der dem weiteren angrenzenden inneren Pfad entspricht, der einen niedrigeren Pegel als der andere der weiteren angrenzenden inneren Pfade aufweist.

7. CDMA-Empfänger nach Anspruch 4, wobei, wenn die beiden Endpfade identische Pegel aufweisen und wenn die Verzögerungszeitdifferenz zwischen dem einem der beiden Endpfade und einem angrenzendem Pfad und die Verzögerungszeitdifferenz zwischen dem anderen der beiden Endpfade und einem angrenzenden Pfad identisch sind und wenn der Pegel des angrenzenden inneren Pfades des einen der beiden Endpfade und der Pegel des angrenzenden inneren Pfades des anderen der beiden Endpfade identisch sind und wenn die weiteren inneren Pfade sich nicht miteinander kreuzen, dann der Pfadselektor (23) angepasst ist, die Pfade zu löschen, die sich nicht innerhalb des Synthesebereiches befinden.

8. CDMA-Empfänger nach Anspruch 1, der weiterhin aufweist:
einen Schwellenauswahlprozessor (24), der zwischen der Verzögerungsprofilmessvorrichtung (2) und dem Pfadselektor (23) eingefügt ist, wobei der Schwellenauswahlprozessor (24) angepasst ist, die Pfade zu löschen, die einen geringeren Pegel als eine Schwelle aufweisen.

9. CDMA-Empfänger nach Anspruch 1, wobei der CDMA-Empfänger in einer Basisstation enthalten ist.

10. CDMA-Empfänger nach Anspruch 1, wobei der CDMA-Empfänger in einem mobilen Endgerät enthalten ist.

11. Pfadauswahlverfahren mit
einem Verzögerungsprofilmessungsschritt, der ein Verzögerungsprofil eines empfangenen Signals misst,
einem Pfadauswahlschritt, der die Pfade aus den Pfaden auswählt, die durch das Verzögerungsprofil dargestellt werden, und
einem Rake-Syntheseschritt, der die Pfade synthetisiert, die von dem Pfadselektor (23) ausgewählt wurden,
**dadurch gekennzeichnet, dass** der Pfadauswahlschritt angepasst ist, einen Schritt des Löschens von einem der beiden Endpfade zu wiederholen, die in einem Pfadmessungsbereich vorliegen, bis der Pfadmessungsbereich, der die übrig gebliebenen Pfade abdeckt, die durch das Löschen verringert wurden, enger als ein Synthesebereich des Rake-Synthetisierers (3) wird.

12. Pfadauswahlverfahren nach Anspruch 11, wobei der Gelöschte der beiden Endpfade ein Pfad ist, der einen niedrigeren Pegel als der andere der beiden Endpfade aufweist.

13. Pfadauswahlverfahren nach Anspruch 12, wobei, wenn die beiden Endpfade identische Pegel aufweisen, dann der Gelöschte der beiden Endpfade ein Pfad ist, der einer Verzögerungszeitdifferenz entspricht, die länger als die andere Verzögerungszeitdifferenz ist, wobei die Verzögerungszeitdifferenz zwischen jedem der beiden Endpfade und einem angrenzendem Pfad gemessen wird.

14. Pfadauswahlverfahren nach Anspruch 13, wobei, wenn die beiden Endpfade identische Pegel aufweisen und wenn die Verzögerungszeitdifferenz zwischen dem einem der beiden Endpfade und einem angrenzendem Pfad und die Verzögerungszeitdifferenz zwischen dem anderen der beiden Endpfade und einem angrenzenden Pfad identisch sind, dann der Gelöschte der beiden Endpfade ein Pfad ist, der dem angrenzenden inneren Pfad entspricht, der einen geringeren Pegel als der andere angrenzende innere Pfad aufweist.

15. Pfadauswahlverfahren nach Anspruch 14, wobei, wenn die beiden Endpfade identische Pegel aufweisen und wenn die Verzögerungszeitdifferenz zwischen dem einem der beiden Endpfade und einem angrenzendem Pfad und die Verzögerungszeitdifferenz zwischen dem anderen der beiden Endpfade und einem angrenzenden Pfad identisch sind und wenn der Pegel des angrenzenden inneren Pfades des einen der beiden Endpfade und der Pegel des angrenzenden inneren Pfades des anderen der beiden Endpfade identisch sind und wenn die weiteren inneren Pfade sich nicht miteinander kreuzen, dann der Gelöschte der beiden Endpfade ein Pfad ist, der einer Verzögerungszeitdifferenz entspricht, die länger als die andere Verzögerungszeitdifferenz ist, wobei jede der Verzögerungszeitdifferenzen zwischen jedem der beiden Endpfade und dem weiteren angrenzenden inneren Pfad gemessen wird.

16. Pfadauswahlverfahren nach Anspruch 15, wobei, wenn die beiden Endpfade identische Pegel aufweisen und wenn die Verzögerungszeitdifferenz zwischen dem einem der beiden Endpfade und einem angrenzendem Pfad und die Verzögerungszeitdifferenz zwischen dem anderen der beiden Endpfade und einem angrenzenden Pfad identisch sind und wenn der Pegel des angrenzenden inneren Pfades des einen der beiden Endpfade und der Pegel des angrenzenden inneren Pfades des anderen der beiden Endpfade identisch sind und wenn die weiteren inneren Pfade sich nicht miteinander kreuzen und wenn die Verzögerungszeitdifferenz zwischen dem einem der beiden Endpfade und dem weiteren angrenzenden inneren Pfad und die Verzögerungszeitdifferenz zwischen dem anderen der beiden Endpfade und dem weiteren angrenzenden inneren Pfad identisch sind, dann der Gelöschte der beiden Endpfade ein Pfad ist, der dem weiteren angrenzenden inneren Pfad entspricht, der einen niedrigeren Pegel als der andere der weiteren angrenzenden inneren Pfade aufweist.

17. Pfadauswahlverfahren nach Anspruch 14, wobei, wenn die beiden Endpfade identische Pegel aufweisen und wenn die Verzögerungszeitdifferenz zwischen dem einem der beiden Endpfade und einem angrenzendem Pfad und die Verzögerungszeitdifferenz zwischen dem anderen der beiden Endpfade und einem angrenzenden Pfad identisch sind und wenn der Pegel des angrenzenden inneren Pfades des einen der beiden Endpfade und der Pegel des angrenzenden inneren Pfades des anderen der beiden Endpfade identisch sind und wenn die weiteren inneren Pfade sich nicht miteinander kreuzen, dann der Pfadselektor (23) angepasst ist, die Pfade zu löschen, die sich nicht innerhalb des Synthesebereiches befinden.

18. Pfadauswahlverfahren nach Anspruch 11, das weiterhin aufweist:
einen Schwellenauswahlbearbeitungsschritt, der zwischen dem Verzögerungsprofilmessungsschritt und dem Pfadauswahlschritt eingefügt ist, wobei der Schwellenauswahlbearbeitungsschritt die Pfade zu löscht, die einen geringeren Pegel als eine Schwelle aufweisen.

## Revendications

1. Récepteur AMRC comprenant :
un dispositif de mesure de profil de retard (21) adapté pour mesurer un profil de retard d'un signal reçu ;
un sélecteur de trajet (23) adapté pour sélectionner des trajets parmi des trajets représentés par ledit profil de retard ; et
un synthétiseur rake (3) adapté pour synthétiser les trajets sélectionnés par ledit sélecteur de trajet (23),
**caractérisé en ce que**
ledit sélecteur de trajet (23) est adapté pour répéter un processus de suppression de l'un de deux trajets d'extrémité existant dans une plage de mesure de trajet jusqu'à ce que la plage de mesure de trajet couvrant les trajets restants qui a été réduite par suppression devienne plus étroite qu'une plage de synthèse dudit synthétiseur rake (3).

2. Récepteur AMRC selon la revendication 1, dans lequel le trajet supprimé des deux trajets d'extrémité est un trajet qui a un niveau inférieur à celui de l'autre des deux trajets d'extrémité.

3. Récepteur AMRC selon la revendication 2, dans lequel, si les deux trajets d'extrémité ont des niveaux identiques, alors le trajet supprimé des deux trajets d'extrémité est un trajet qui correspond à une différence de temps de retard supérieure à l'autre différence de temps de retard, chacune des différences de temps de retard étant mesurée entre chacun des deux trajets d'extrémité et un trajet intérieur contigu.

4. Récepteur AMRC selon la revendication 3, dans lequel, si les deux trajets d'extrémité ont des niveaux identiques et la différence de temps de retard entre l'un des deux trajets d'extrémité et un trajet intérieur contigu et la différence de temps de retard entre l'autre des deux trajets d'extrémité et un trajet intérieur contigu sont identiques, alors le trajet supprimé des deux trajets d'extrémité est un trajet qui correspond au trajet intérieur contigu qui a un niveau inférieur à celui de l'autre trajet intérieur contigu.

5. Récepteur AMRC selon la revendication 4, dans lequel, si les deux trajets d'extrémité ont des niveaux identiques, la différence de temps de retard entre l'un des deux trajets d'extrémité et un trajet intérieur contigu et la différence de temps de retard entre l'autre des deux trajets d'extrémité et un trajet intérieur contigu sont identiques, le niveau du trajet intérieur contigu de l'un des deux trajets d'extrémité et le niveau du trajet intérieur contigu de l'autre des deux trajets d'extrémité sont identiques, et les trajets intérieurs supplémentaires ne se croisent pas mutuellement, alors le trajet supprimé des deux trajets d'extrémité est un trajet qui correspond à une différence de temps de retard supérieure à l'autre différence de temps de retard, chacune des différences de temps de retard étant mesurée entre chacun des deux trajets d'extrémité et le trajet intérieur contigu supplémentaire.

6. Récepteur AMRC selon la revendication 5, dans lequel, si les deux trajets d'extrémité ont des niveaux identiques, la différence de temps de retard entre l'un des deux trajets d'extrémité et un trajet intérieur contigu et la différence de temps de retard entre l'autre des deux trajets d'extrémité et un trajet intérieur contigu sont identiques, le niveau du trajet intérieur contigu correspondant à l'un des deux trajets d'extrémité et le niveau du trajet intérieur contigu de l'autre des deux trajets d'extrémité sont identiques, les trajets intérieurs supplémentaires ne se croisent pas mutuellement, et la différence de temps de retard entre l'un des deux trajets d'extrémité et le trajet intérieur contigu supplémentaire et la différence de temps de retard entre l'autre des deux trajets d'extrémité et le trajet intérieur contigu supplémentaire sont identiques, alors le trajet supprimé des deux trajets d'extrémité est un trajet qui correspond au trajet intérieur contigu supplémentaire qui a un niveau inférieur à celui de l'autre des trajets intérieur contigus supplémentaires.

7. Récepteur AMRC selon la revendication 4, dans lequel, si les deux trajets d'extrémité ont des niveaux identiques, la différence de temps de retard entre l'un des deux trajets d'extrémité et un trajet intérieur contigu et la différence de temps de retard entre l'autre des deux trajets d'extrémité et un trajet intérieur contigu sont identiques, le niveau du trajet intérieur contigu de l'un des deux trajets d'extrémité et le niveau du trajet intérieur contigu de l'autre des deux trajets d'extrémité sont identiques, et les trajets intérieurs supplémentaires se croisent mutuellement, alors ledit sélecteur de trajet (23) est adapté pour supprimer des trajets qui ne tombent pas dans la plage de synthèse.

8. Récepteur AMRC selon la revendication 1, comprenant en outre :
un processeur de sélection de seuil (24) inséré entre ledit dispositif de mesure de profil de retard (2) et ledit sélecteur de trajet (23), dans lequel ledit processeur de sélection de seuil (24) est adapté pour supprimer des trajets ayant un niveau inférieur à un seuil.

9. Récepteur AMRC selon la revendication 1, dans lequel le récepteur AMRC est compris dans une station de base.

10. Récepteur AMRC selon la revendication 1, dans lequel le récepteur AMRC est compris dans un terminal mobile.

11. Procédé de sélection de trajet comprenant :
une étape de mesure de profil de retard qui mesure un profil de retard d'un signal reçu ;
une étape de sélection de trajet qui sélectionne des trajets parmi des trajets représentés par ledit profil de retard ; et
une étape de synthèse rake qui synthétise les trajets sélectionnés par ledit sélecteur de trajet (23),
**caractérisé en ce que**
ladite étape de sélection de trajet répète un processus de suppression de l'un de deux trajets d'extrémité existant dans une plage de mesure de trajet jusqu'à ce que la plage de mesure de trajet couvrant les trajets restants qui a été réduite par la suppression devienne plus étroite qu'une plage de synthèse dudit synthétiseur rake (3).

12. Procédé de sélection de trajet selon la revendication 11, dans lequel le trajet supprimé des deux trajets d'extrémité est un trajet qui a un niveau inférieur à celui de l'autre des deux trajets d'extrémité.

13. Procédé de sélection de trajet selon la revendication 12, dans lequel, si les deux trajets d'extrémité ont des niveaux identiques, alors le trajet supprimé des deux trajets d'extrémité est un trajet qui correspond à une différence de temps de retard supérieure à l'autre différence de temps de retard, chacune des différences de temps de retard étant mesurée entre chacun des deux trajets d'extrémité et un trajet intérieur contigu.

14. Procédé de sélection de trajet selon la revendication 13, dans lequel, si les deux trajets d'extrémité ont des niveaux identiques et la différence de temps de retard entre l'un des deux trajets d'extrémité et un trajet intérieur contigu et la différence de temps de retard entre l'autre des deux trajets d'extrémité et un trajet intérieur contigu sont identiques, alors le trajet supprimé des deux trajets d'extrémité est un trajet qui correspond au trajet intérieur contigu qui a un niveau inférieur à celui de l'autre trajet intérieur contigu.

15. Procédé de sélection de trajet selon la revendication 14, dans lequel, si les deux trajets d'extrémité ont des niveaux identiques, la différence de temps de retard entre l'un des deux trajets d'extrémité et un trajet intérieur contigu et la différence de temps de retard entre l'autre des deux trajets d'extrémité et un trajet intérieur contigu sont identiques, le niveau du trajet intérieur contigu de l'un des deux trajets d'extrémité et le niveau du trajet intérieur contigu de l'autre des deux trajets d'extrémité sont identiques, et les trajets intérieurs supplémentaires ne se croisent pas mutuellement, alors le trajet supprimé des deux trajets d'extrémité est un trajet qui correspond à une différence de temps de retard supérieure à l'autre différence de temps de retard, chacune des différences de temps de retard étant mesurée entre chacun des deux trajets d'extrémité et le trajet intérieur contigu supplémentaire.

16. Procédé de sélection de trajet selon la revendication 15, dans lequel, si les deux trajets d'extrémité ont des niveaux identiques, la différence de temps de retard entre l'un des deux trajets d'extrémité et un trajet intérieur contigu et la différence de temps de retard entre l'autre des deux trajets d'extrémité et un trajet intérieur contigu sont identiques, le niveau du trajet intérieur contigu correspondant à l'un des deux trajets d'extrémité et le niveau du trajet intérieur contigu de l'autre des deux trajets d'extrémité sont identiques, les trajets intérieurs supplémentaires ne se croisent pas mutuellement, et la différence de temps de retard entre l'un des deux trajets d'extrémité et le trajet intérieur contigu supplémentaire et la différence de temps de retard entre l'autre des deux trajets d'extrémité et le trajet intérieur contigu supplémentaire sont identiques, alors le trajet supprimé des deux trajets d'extrémité est un trajet qui correspond au trajet intérieur contigu supplémentaire qui a un niveau inférieur à celui de l'autre des trajets intérieur contigus supplémentaires.

17. Procédé de sélection de trajet selon la revendication 14, dans lequel, si les deux trajets d'extrémité ont des niveaux identiques, la différence de temps de retard entre l'un des deux trajets d'extrémité et un trajet intérieur contigu et la différence de temps de retard entre l'autre des deux trajets d'extrémité et un trajet intérieur contigu sont identiques, le niveau du trajet intérieur contigu de l'un des deux trajets d'extrémité et le niveau du trajet intérieur contigu de l'autre des deux trajets d'extrémité sont identiques, et les trajets intérieurs supplémentaires se croisent mutuellement, alors ledit sélecteur de trajet (23) supprime des trajets qui ne tombent pas dans la plage de synthèse.

18. Procédé de sélection de trajet selon la revendication 11, comprenant en outre :
une étape de traitement de sélection de seuil insérée entre ladite étape de mesure de profil de retard et ladite étape de sélection de trajet, dans lequel ladite étape de traitement de sélection de seuil supprime des trajets ayant un niveau inférieur à un seuil.
